# EUROPEAN PATENT APPLICATION

(11) **EP 3 892 351 A2**
(43) Date of publication of application: **13.10.2021**
(21) Application number: 21167252.2
(22) Date of filing: 07.04.2021
(51) Int. Cl.: B01D 39/16, A41D 13/11, A62B 23/02, B29C 51/14, B32B 5/02, B32B 5/04, B32B 5/26, D04H 1/4291, D04H 1/435, D04H 1/4374, D04H 1/544, D04H 1/549, D04H 1/55, D04H 1/559

(54) **METHOD OF APPLYING A NON-WOVEN ELEMENT TO AN ELASTIC FABRIC MAIN BODY**

(30) Priority: 07.04.2020 IT 202000007441
(71) Applicant: Orange S.r.l., 16121 Genova (GE) (IT)
(72) Inventor: Bottino, Marcello, 16121 Genova (GE) (IT)
(74) Representative: Bottino, Giovanni

(57) **Abstract**

Method for applying a non-woven fabric element (3) to a main body (2) of elastic fabric, comprising the following steps:
a) cutting a polypropylene non-woven fabric to form said non-woven fabric element (3);
b) positioning the non-woven fabric element (3) overlapping the main body (2);
c) thermal pressing the set of the main body (2) and non-woven fabric element (3) to apply a pressure and temperature such that a portion of the non-woven fabric element (3) melts and adheres to the main body (2).

## Description

The present invention relates to a method for applying a non-woven fabric element to a main body of elastic fabric. Such a method is advantageous in a variety of applications, such as the manufacture of a filtered breathing device or devices with different functions, such as diapers or other clothing.

Filtered breathing devices are currently known and used in a wide variety of applications to protect the respiratory system from airborne particles, from dust and from solid and liquid aerosols, for example for the defence against fine dust and other pollutants or from pathogens such as bacteria or viruses.

Specifically, the invention is particularly adapted to the production of a filtering facial mask, i.e., a mask adapted to cover the lower part of the face, in particular only the mouth, the nose and the parts of the face adjacent thereto, avoiding the inhalation of dust or other matter suspended in air.

The masks are typically consist of one or more layers of materials permeable to air, typically an internal layer, a filtering layer and a covering layer.

Some masks provide a covering which creates an inner chamber enclosing the mouth and nose which are thus separated from the external environment and an elastic band constraining the covering to the user's face. In such masks, the covering is entirely in filtering material and, usually, in non-woven fabric. Alternatively, it is impermeable to air (for example rubber, neoprene or silicone) and equipped with interchangeable filters.

When air passes through the mask, the filtering layer retains the contaminants contained within the air flow, preventing their inhalation by the user. Similarly, the exhaled air passing through the mask is purified of pathogens and contaminants, allowing the protection of people nearby. The filtering layer typically consists of a monolayer or multilayer non-woven fabric element.

The masks currently on the market generally consist of several parts sewn together or ultrasonically welded.

However, this technology allows welds of reduced extensions. For this reason the layers forming the mask are joined together by a series of welding segments spaced apart from each other. Besides having a lower aesthetic yield, such a solution leaves air passage intervals which decrease the performance of the mask.

US 2020/0022430 A1 describes a fabric structure comprising a first weaving layer, a second weaving layer woven with the first weaving layer, an intermediate connecting layer located between the first weaving layer and the second weaving layer, and a solar protection layer applied to the first weaving layer. The intermediate connecting layer is woven between the first weaving layer and the second weaving layer simultaneously when the first weaving layer and the second weaving layer are woven, then the entire assembly is heated. This prevents the formation of different zones optimized for adhesion between the layers and for air filtration, respectively.

Despite the many types of masks available, there is nevertheless a continuous search for protective devices with certain properties which are superior to those of the systems known so far and manufacturing methods which are simple and inexpensive and at the same time guarantee high effectiveness.

The object of the present invention is a method for applying a non-woven fabric element to a main body of elastic fabric, which method comprises the following steps:
a) cutting a polypropylene non-woven fabric (NWF) to form said non-woven fabric element;
b) positioning the non-woven fabric element overlapping the main body;
c) thermal pressing of the set of the main body and non-woven fabric element to apply a pressure and temperature such that a portion of the non-woven fabric element melts and adheres to the main body.

This results in a welding of the non-woven fabric element onto an elastic fabric, preferably consisting of a synthetic stretch fabric.

The non-woven fabric is also known as a polypropylene filter, spun-bond or melt-blown, and may have subtle structural differences according to the process with which it is manufactured.

The use of a hot pressing machine has the great advantage of exploiting the intrinsic thermal features of the materials to create a tight constraint between the components and allow the use of glues and/or seams to be avoided.

This has the great advantage of allowing a single, even large, regular and continuous weld. In addition to high-quality aesthetic performance, this allows high comfort on the skin by virtue of the uniformity and thickness thereof.

The non-woven fabric element can be a filtering element, e.g., in a mask, or an absorbent element, e.g., in a diaper, or an element with other functions if suitably treated, e.g., a waterproof element.

In an embodiment, said portion is a peripheral portion of the non-woven fabric element.

A peripheral coupling zone is therefore formed in which the non-woven fabric melts and fixes on the main body, keeping the central zone of the non-woven fabric element intact for the filtering function or for other functions as indicated above.

In a preferred embodiment the non-woven fabric has a low melting temperature, preferably below 180°C.

In an embodiment, the thermal pressing occurs at constant pressure.

In a further embodiment, said thermal pressing pressure is between 0.2 Kg/cm² and 0.4 Kg/cm².

In an embodiment, said thermal pressing temperature is between 145°C and 180°C.

In a further embodiment, the application time of the thermal pressing is between 10 and 20 seconds.

The non-woven fabric element can consist of a single layer or a plurality of layers, the same or different from each other. In the latter case, the thermal pressing allows carrying out a weld on both the main body and a weld between the different layers forming the non-woven fabric element.

In a further embodiment, the main body material consists of polyamide fibre and stretch yarn. Alternatively or in combination, the main body material consists of polyester fibre and stretch yarn. Alternatively or in combination, the main body material consists of cotton or other natural fibres and stretch yarn.

According to a preferred embodiment the main body material consists of polyamide and elastane.

By exerting heat and pressure for a short time on one or more layers of non-woven fabric on the main body in synthetic material, the polypropylene is melted on the other fabric, obtaining a strong weld between the two materials.

Heat and pressure can be applied with different types of equipment and solutions which exert flat and constant pressure. The pressure, temperature and application time parameters can vary, in the above ranges, according to the thicknesses of the materials.

In a preferred embodiment, the method is applied for producing a protective mask of a user's airways, the main body being shaped so as to cover the lower part of the user's face in the worn condition, the non-woven fabric element being positioned overlapping the main body in the area adapted to come into contact with the mouth and nose of the user.

According to an improvement, the main body comprises means for constraining to the ears and/or head of the user.

Thereby a mask is manufactured in a few simple steps which is comfortable to use due to the lack of seams and the elasticity of the materials, which simultaneously ensures optimal protection performance.

The main body acts as a support structure forming the majority of the mask, comprising the means for constraining the mask itself to the user's head and simultaneously acts as a substrate for fixing the filtering element in non-woven fabric.

The great advantage of the invention is inherent in the comfort and fit which the structure ensures, by virtue of the combination of an elastic fabric which confers these features to the functionality of a non-woven fabric material, which can act as a filter in the case of the mask. The raw cut of the main body confers high comfort when the mask is worn, since no edging is required.

In a preferred embodiment, cutting the main body also includes creating two openings in the main body to constrain to the user's ears. Alternatively or in combination, constraint appendices to the head of the user can be created.

In a further embodiment, following step c) darts are formed in the area adapted for contact with the user's nose and/or in the area adapted for contact with the user's chin to confer a concave configuration to the mask. The darts are closed by ultrasonic welding.

Thereby, a final shape is formed with a further simple step so that the mask can be worn easily in the correct manner and ensures high comfort over time and optimal adhesion to the user's face to properly exercise the protective function thereof.

In a preferred embodiment, the thermal pressing is carried out only on said peripheral portion of the non-woven fabric element by means of a special mould.

This allows the temperature and pressure necessary to melt the filtering element to be applied only in the area intended for adhesion, without involving the rest of the filtering element and the entire mask or other device.

In an alternative and optional variant embodiment, step c) includes the following sub-steps:
c1) positioning a removable thermal shielding element overlapping the non-woven fabric element, which shielding element has smaller dimensions than the non-woven fabric element and is positioned so that said peripheral portion of the non-woven fabric element is left exposed;
c2) applying said pressure and temperature to the entire set to melt only the exposed peripheral portion of the non-woven fabric element;
c3) removing the shielding element.

This allows the use of a hot pressing machine which applies a uniform temperature and pressure, taking advantage of the higher melting temperature of the main body and the lower melting temperature of the non-woven fabric element. The thermal shielding element protects the central part of the non-woven fabric element from melting, preserving the functionality thereof, and limiting the melting to the peripheral portion of the non-woven fabric element adhering to the main body.

The object of the present invention is further a protective mask of a user's airways comprising a covering element of at least the mouth and nose of the user and means for constraining the covering element to the user's head. The covering element comprises a main elastic fabric body shaped to cover the lower part of the user's face in the worn condition. The covering element further comprises a filtering element of non-woven polypropylene material shaped to cover the nose and mouth of the wearer, which filtering element is coupled to said main body by means of a thermofused and solidified peripheral portion adhering to said main body.

In an embodiment, the main body material is a warp-knitted elastic fabric. However, knitted or loom fabrics can be used.

In an embodiment, the main body material is a fabric made of polyamide and/or polyester fibre and stretch yarn.

According to an improvement, the main body material consists of polyamide and elastane.

In an embodiment, said constraining means comprise two openings made in said main body and/or elastic appendages in the same or other material, which openings or elastic appendages are adapted to constrain the main body to the user's ears or neck.

The method and the device described above use the combination of an elastic polyamide or polyester fabric with a polypropylene filter by welding or direct melting. Thereby, the ergonomics of the main body are combined with the filtering functionality of the non-woven fabric element applied, using a method of fixing, welding or direct melting, extremely simple and effective. The invention can advantageously be applied for the production of surgical masks, FFP1, FFP2, FFP3 PPE masks, and various clothing. In fact, it is evident to those skilled in the art that the invention set forth heretofore and subsequently claimed is not to be understood as limited to a mask but can be applied to any other product in which such a construction is functional, which combines elastic material for greater fit and breathability or comfort on the body and filtering element or liquid retention element in polypropylene, such as diapers.

The materials used also make the mask washable normally or sterilizable in special UV sterilizers.

These and other features and advantages of the present invention will become clearer from the following description of some non-limiting exemplary embodiments illustrated in the attached drawings in which:

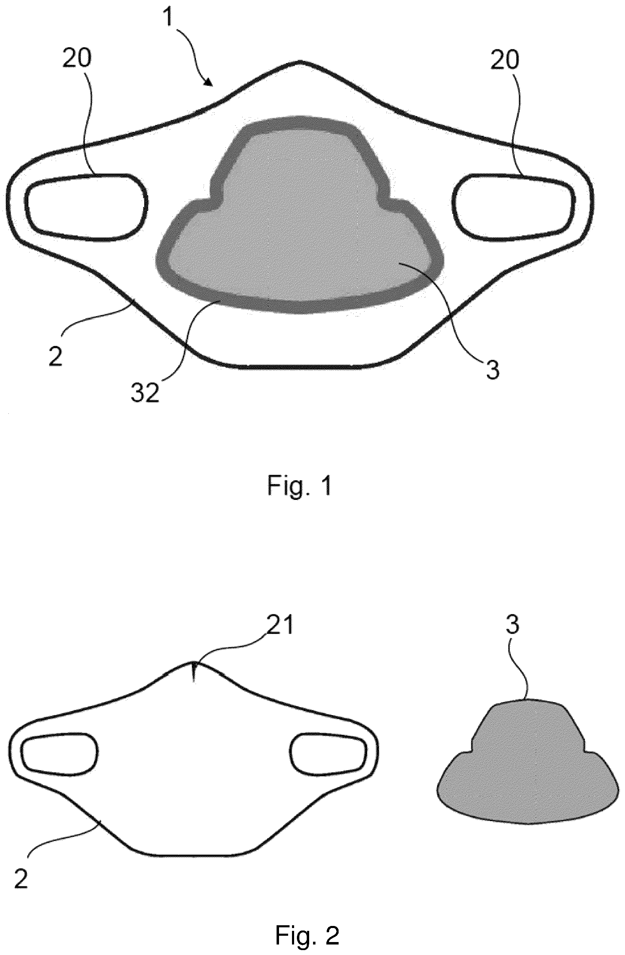

fig. 1 shows an overall view of the mask object of the present invention;
fig. 2 shows the separate components of the mask;
fig. 3 shows the relative positioning between the components of the mask;
fig. 4 shows the formation of a dart;
fig. 5 shows the application of temperature and pressure to cause the adhesion of the components by a thermal pressing machine;
fig. 6 and 7 show two different views, respectively front and side, of the mask worn by a user;
fig. 8 shows the application of temperature and pressure to cause the adhesion of the components by a thermal pressing machine with a special mould.

The figures show the protective mask 1 of a user's airways according to the present invention. The mask 1 comprises a single main body 2 of elastic fabric, shaped to cover the lower part of the user's face in the worn condition. The main body 2 is provided with two openings 20 adapted to constrain the main body and therefore the entire mask 1 to the user's ears.

The material of the main body 2 is a warp-knitted fabric and consists of polyamide and/or polyester fibre and stretch yarn, in particular it consists of polyamide and elastane in varying percentages. A preferred embodiment includes 80% nylon and 20% elastane. However, other types of synthetic and/or natural fibres can be included, in variable percentages, adapted to create a main body 2 which acts as a substrate and support element of the entire mask 1.

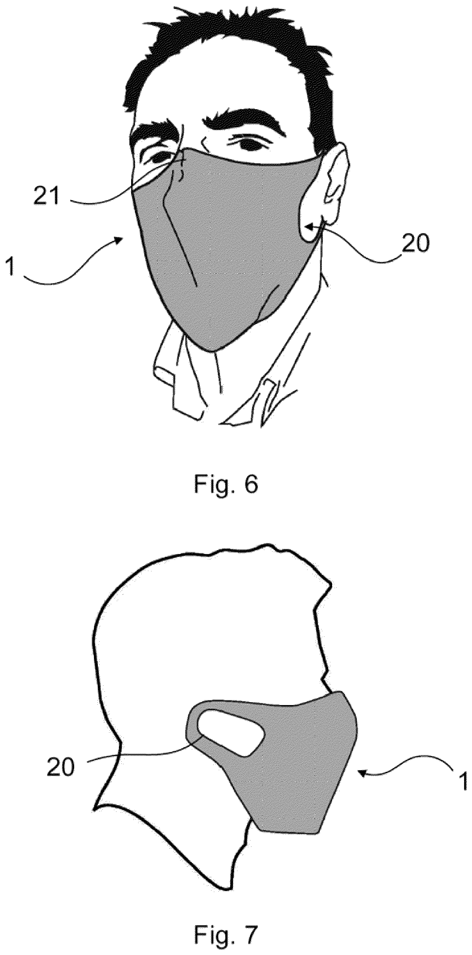

The main body 2 is preferably initially flat and symmetrical along an axis corresponding to the vertical axis in the worn position, so as to have two opposite side ends with respect to said axis in which the openings 20 are present. The openings 20 are large enough to accommodate the user's ears and are positioned so as to create with the peripheral side edges of the main body two attachment strings to the user's ears as seen in figures 6 and 7.

The mask 1 further comprises a filtering element 3 of non-woven fabric material or melt-blown fabric (MBF) having a shape preferably smaller than the main body 2 and such as to cover the user's nose and mouth in the worn condition.

The filtering element 3 is coupled to the main body 2 by means of a peripheral portion 32 thermofused and solidified in adhesion to the main body 2.

The material of the filtering element 3 is preferably polypropylene. Other materials adapted to the constitution of a filtering and thermofusing non-woven fabric can be used.

For the production of the mask 1 illustrated in the figures, first an elastic fabric is cut to form the main body 2. The cut also creates the two openings 20 adapted to constrain the main body 2 to the user's ears. The elastic fabric preferably consists of polyamide and elastane, as indicated above.

The production method further includes cutting a non-woven fabric to form the filtering element 3.

Both cuts can be performed by any known technique feasible in this context, such as movable blade cutting, die-cutting, laser cutting, etc.

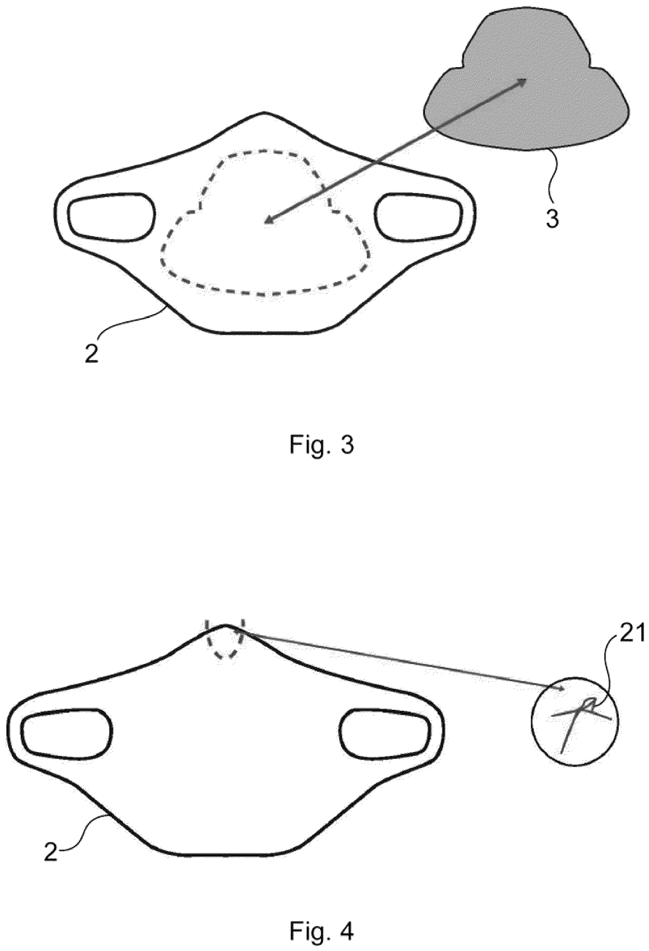

The filtering element 3 is then positioned overlapping the main body 2 in the area adapted to come into contact with the user's mouth and nose, as indicated by the dotted line of figure 3.

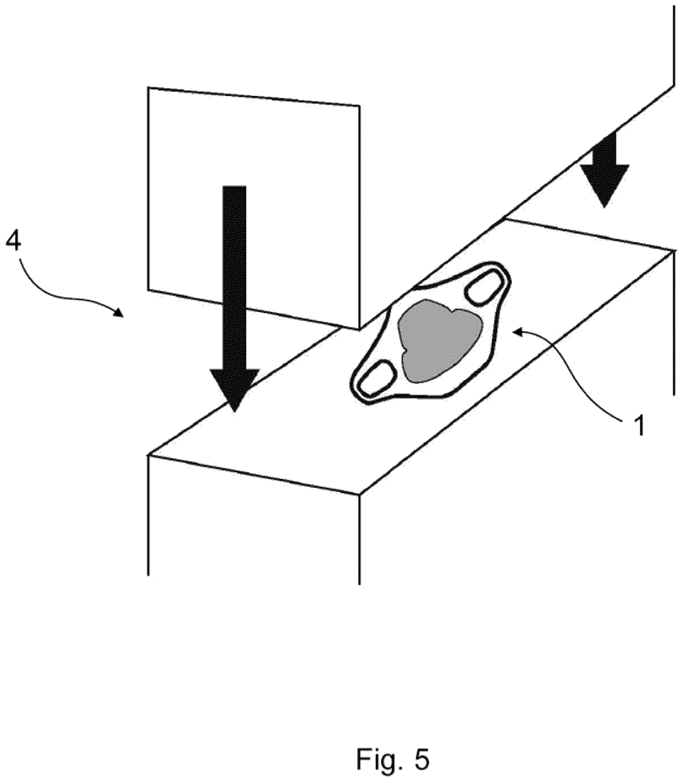

The set of the main body 2 and filtering element 3 is then positioned in a thermal pressing machine 4, preferably a machine having a horizontal work plane as shown in figure 5. The thermal pressing machine 4 then applies to the mask 1 thus formed a pressure and a temperature such that the peripheral portion 32 of the filtering element 3 melts and adheres to the main body 2.

Preferably, the thermal pressing is carried out only on the peripheral portion 32 of the filtering element 3 by means of a special mould 40 at a temperature between 145°C and 180°C and at a pressure between 0.2Kg/cm² and 0.4Kg/cm².

The main body 2 can be uniform in the overlapping zone of the filtering element 3, as shown in the figures. Thereby, in such an overlapping zone the mask has at least two layers, respectively consisting of the main body 2 and the filtering element 3.

Alternatively, the main body 2 has an opening substantially corresponding to the filtering element and of slightly smaller dimensions, so that by overlapping the filtering element 3 with the main body 2 in the final position, the two elements are in contact only for a peripheral overlapping zone substantially corresponding to the peripheral portion 32 of mutual coupling. This configuration is particularly advantageous in the case of filtering elements of non-planar, for example concave, shape, as occurs in certain types of masks of the FFP2 or FFP3 type.

Once the thermal pressing has been carried out, a dart 21 is formed in the area adapted to contact the user's nose, i.e., in the upper edge of the main body 2 in a position equidistant from the openings 20. Preferably, a corresponding dart is also formed in the area adapted for contact with the user's chin, not seen in the figure. The dart 21 can be formed with any currently known suitable technology, such as for example ultrasound, hot melting, stitching or glue and confer a concave configuration to the mask 1.

An optional embodiment of the manufacturing method includes the positioning of a removable thermal shielding element overlapping the filtering element, not shown in the figure, before performing the thermal pressing. The shielding element is smaller than the filtering element and is positioned so as to leave the peripheral portion 32 of the filtering element 3 exposed. The shielding element can be of any material adapted to thermally insulate the filtering element 3.

Once the correct positioning has been carried out, the thermal pressing is carried out as shown above and then the shielding element is removed.

The mask thus formed is simple to manufacture and extremely comfortable because it consists of a single element without seams or the use of glues which, by virtue of the elasticity of the material and the presence of darts, perfectly adapts to the user's face as shown in figures 6 and 7.

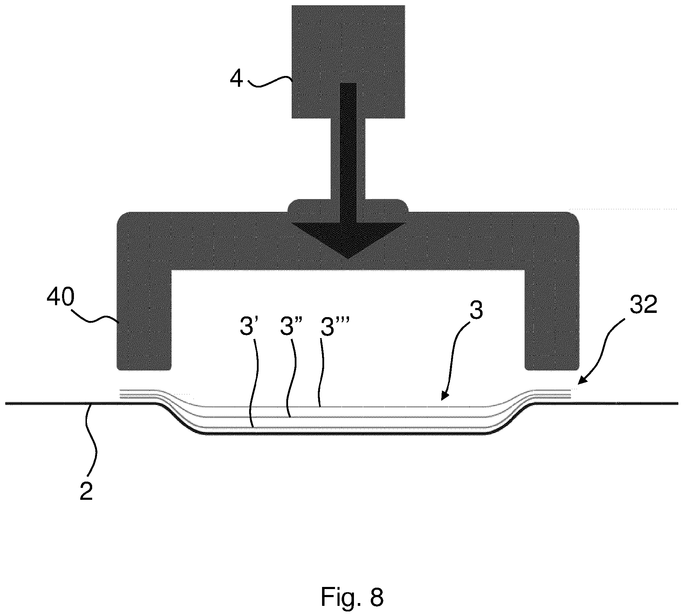

Figure 8 shows the application of a multilayer non-woven fabric element 3 to a main body 2 by means of a thermal pressing machine with a special mould 40.

The mould 40 has an operative end in a shape substantially equal to the peripheral portion 32 of the non-woven fabric element 3 adapted to be welded on the main body 2.

The non-woven fabric element 3 consists of three different layers 3', 3" and 3"' of polypropylene overlapping each other. The pressure and heat exerted by the thermal pressing machine 4 by means of the mould 40 on the set of the non-woven fabric element 3 and the main body 2 causes a melting of the peripheral portion 32 of the three layers 3', 3" and 3"', which are welded to each other and on the main body 2, so as to permanently adhere to the latter.

## Claims

1. Method for applying a non-woven fabric element (3) to a main body (2) of elastic fabric,
**characterized in that**
it comprises the following steps:
a) cutting a polypropylene non-woven fabric to form said non-woven fabric element (3);
b) positioning the non-woven fabric element (3) overlapping the main body (2);
c) thermal pressing the set of the main body (2) and non-woven fabric element (3) to apply a pressure and temperature such that a portion of the non-woven fabric element (3) melts and adheres to the main body (2).

2. Method according to claim 1, wherein said portion is a peripheral portion (32) of the non-woven fabric element (3).

3. Method according to claim 1 or 2, wherein the thermal pressing occurs at constant pressure.

4. Method according to one or more of the preceding claims, wherein said pressure is between 0.2 Kg/cm² and 0.4 Kg/cm².

5. Method according to one or more of the preceding claims, wherein said temperature is between 145 °C and 180 °C.

6. Method according to one or more of the preceding claims, wherein the thermal pressing is exerted for a period between 10 and 20 seconds.

7. Method according to one or more of the preceding claims, wherein the material of the main body (2) consists of polyamide and/or polyester fibre and elastic yarn.

8. Method according to one or more of the preceding claims, wherein the material of the main body (2) is warp-knitted.

9. Method according to one or more of the preceding claims, wherein the thermal pressing is carried out only on said peripheral portion (32) of the non-woven fabric element (3) by means of a special mould (40).

10. Method according to one or more of claims 1 to 6, wherein step c) includes the following sub-steps:
c1) positioning a removable thermal shielding element overlapping the non-woven fabric element (3), which shielding element has smaller dimensions than the non-woven fabric element (3) and is positioned so that said peripheral portion (32) of the non-woven fabric element (3) is left exposed;
c2) applying said pressure and temperature to the entire set to melt only the exposed peripheral portion (32) of the non-woven fabric element (3);
c3) removing the shielding element.

11. Method according to one or more of the preceding claims, wherein the main body (2) is shaped like a mask (1) so as to cover the lower part of the user's face in the worn condition and comprises means for constraining to the user's ears and/or head, the non-woven fabric element (3) being positioned overlapping the main body (2) in the area adapted to come in contact with the user's mouth and nose.

12. Protective mask of a user's airways comprising a covering element of at least the mouth and nose of the user and means for constraining the covering element to the user's head,
**characterized in that**
the covering element comprises a main body (2) of elastic fabric shaped to cover the lower part of the user's face in the worn condition of the mask (1) and a filtering element (3) of non-woven polypropylene material shaped so as to cover the user's nose and mouth in the worn condition of the mask (1), which filtering element (3) is coupled to said main body (2) by a peripheral portion (32) thermofused and solidified in adhesion to said main body (2).

13. Mask according to claim 12, wherein the material of the main body (2) is a warp-knitted elastic fabric.

14. Mask according to claim 12 or 13, wherein the material of the main body (2) consists of polyamide and/or polyester fibre and stretch yarn.

15. Mask according to claim 14, wherein the material of the main body (2) consists of polyamide and elastane.
